# EUROPEAN PATENT APPLICATION

(11) **EP 1 091 544 A2**
(43) Date of publication of application: **11.04.2001**
(21) Application number: 00120964.2
(22) Date of filing: 27.09.2000
(51) Int. Cl.: H04M 3/00

(54) **Method for constructing communication networks**

(30) Priority: 07.10.1999 DE 19948414
(71) Applicant: Nortel Networks Limited, Montreal, Quebec H2Y 3Y4 (CA)
(72) Inventor: Samson, Luc L., Hale Rd. Brampton, On, L6V2M7 (CA); Proehl, Frank, 60388 Frankfurt/Main (DE); Woeste, Christian, 60599 Frankfurt/Main (DE)
(74) Representative: Wiebusch, Manfred

(57) **Abstract**

Process for the construction of a communication network for telephone traffic and Internet dial-up traffic, in which the network is optimized for telephone traffic and Internet dial-up traffic while taking into account statistical data. By including both telephone and Internal dial-up traffic in the evaluation, substantial synergistic effects can be achieved in the optimization.

## Description

The invention concerns a process for the construction of a hierarchically structured communication network for telephone traffic and Internet dial-up traffic, with nodes that differ in their hierarchical steps and their technical equipment, of which at least one is arranged as an Internet interface, and which are connected to each other by lines that have different band widths and/or are based on different transmission media.

For the great majority of users, Internet access takes place through a public or private telephone network. Since the telephone market has been liberalized in most countries, users can choose between various operators of telephone line networks and/or mobile radio-based networks. The lines that connect the user's connection with a dispatching node are, however, as a rule, in the hands of a single network operator that will hereinafter be designated as the Primary Network Operator. If the participant wishes to use the network of another network operator, then the transition into this other network, hereinafter called the Secondary Network Operator, is done at special connecting points called PoI's (Points of Interconnection). Thus, there is a hierarchical network structure in which the lower level is formed by the connections of the individual participants and the next higher level by the PoI's.

Even a network of the Secondary Network Operator is generally structured hierarchically. The top level is formed by a number of fully networked nodes that are connected to each other with powerful lines such as broadband copper cable, fiberglass cable, radio links and the like. These nodes and the associated connection form, to a certain extent, the backbone of the network and are designated as the backbone. Often, there is at least one further hierarchical level between the backbone and the PoI's. In practice, the nodes of the upper levels usually have the additional function of a PoI. In building such a communication network, it must therefore be specified which hierarchical level each individual node is to be assigned, which nodes of the lower hierarchical level are to be connected directly to this node and, unless it is a backbone node, to which node of the next higher hierarchical level the node in question is to be connected.

Hereinafter, these specifications will be called the configuration of the network. Furthermore, in the structure of the network, it must be determined which technical equipment the various nodes are to receive and how the lines through which these nodes are connected are to be created technically. These determinations will hereinafter be called "dimensioning." The technical task now resides in finding a configuration and dimensioning the network, which makes it possible to serve all participants as needed with the least possible installation and operating expense. The basis for this is a determination of the need based on current statistical data, or statistical data to be expected in the future, on the spatial and time distribution of the density of data traffic.

If the Secondary Network Operator also offers access to the Internet and offers corresponding Internet dial-up nodes on its network, then data traffic consists not only of telephone connections between participants, but also of Internet dial-up traffic between participants and the dial-up nodes offered on the Secondary Network. Since a different transmission protocol is used for Internet dial-up traffic than is used for telephone traffic, in this case, when configuring the net, it must also be specified which nodes are to be set up as interfaces between telephone-specific transmission protocol and Internet-specific transmission protocol.

The problem to be solved by the invention is to provide a process for building up a communication network for telephone traffic and Internet dial-up traffic that makes possible service as needed for both types of traffic at the lowest possible installation and operating expense.

This problem is solved by the invention through the following steps:
(a) providing possible locations for the nodes,
(b) generating separate traffic statistics for telephone traffic and Internet dial-up traffic,
(c) issuing an initial configuration for the network,
(d) dimensioning the network elements, that is the nodes and lines, on the basis of peak load resulting from the two traffic statistics generated in step (b) for each network element,
(e) calculating an evaluation function that represents the installation and operating expenses for the current configuration,
(f) changing the configuration according to the principle of randomness and repeating steps (d) and (e) for the new configuration,
(g) comparing the evaluation functions for the new and the old configuration and deciding which one will be adopted as the current configuration according to a simulated annealing algorithm,
(h) repeating steps (f) and (g) until the evaluation function converges,
(i) setting up the nodes and lines according to the configuration obtained in step (h).

The invention is based on the recognition that, in the configuration and dimensioning of the network, substantial synergistic effects can be achieved if the determination of need is done on the basis of the traffic statistics for both types of traffic, and taking into account the special characteristics of each. These synergy effects result from the fact that the same lines are used for telephone traffic and Internet dial-up traffic on the lower levels, but then however, at one of the higher levels, they were differentiated and the spatial and temporal traffic density profiles for telephone traffic on the one hand and Internet dial-up traffic on the other hand differ substantially from each other. For example, it is often the case that telephone traffic has the highest density in the daytime, during normal office hours, while the Internet dial-up traffic reaches its greatest density in the evening and night hours. In the process in accordance with the invention, this effect automatically leads to the fact that the nodes and lines on the lower level, which are used in common by the telephone and Internet traffic, can be dimensioned to be smaller, so that corresponding cost savings are obtained. Similar savings effects can also result from the different spatial distribution of the traffic densities. If, for example, in a certain region, Internet traffic shows an especially high proportion of the total traffic that occurs, then the lines in this region can be relieved of the load and can be designed in a more cost-effective manner by increasing the interfaces in this region, thereby using the Internet traffic lines more efficiently. Savings effects of this type are automatically achieved by using the process according to the invention without requiring the user of the process to undertake special considerations or to analyze the situation in detail.

Furthermore, the process is especially suitable for optimization in cases in which even a part of the telephone traffic is carried out over the Internet. The decision as to whether the entire transmission capacity or at least a part of the transmission capacity for telephone traffic between two nodes is offered by means of direct tines or over the Internet then represents a further parameter of configuration and optimization of the network.

The point of departure for the process is a beginning configuration selected by the user, then optimized according to a process known in the literature as "simulated annealing" (simulated tempering). At the same time, small changes are made in the beginning random configuration, for example by raising or lowering the hierarchical level of a node, canceling a PoI completely or equipping a special node as an additional Internet interface. Each individual node and each individual line in the changed configuration is then dimensioned on the basis of the traffic statistics in such a manner that for both telephone traffic and Internet dial-up traffic there is sufficient capacity available. Depending upon the dimensioning, there arises for every node and every line a certain installation expense that goes into an estimating function for the given configuration. This expense also goes into the evaluation function according to a certain cost model. Similarly, the costs for outside services flow into the evaluation functions as well, especially the costs for providing network components by the primary network operator. The evaluation function so calculated therefore represents a measurement for the total cost for the installation and the operation of the network. After each random change in the network configuration and corresponding dimensioning, the evaluation function is again calculated.

Changes in the configuration that have led to a higher evaluation function are either accepted or rejected according to the simulated annealing algorithm. This algorithm is derived from the processes that lead to the fact that heating and cooling a solid body leads to the solid body assuming its lowest energy level structure. In the "heating phase," even random changes in the configuration are permitted, which leads to a higher energy or evaluation function. Only in a later "cooling phase" is the evaluation function minimized. "Heating" one or more times prevents the configuration from becoming dependent upon a local minimum that is far from the absolute minimum. It can be shown that such a process eventually converges to a configuration in which the evaluation function lies near a relative optimum at least.

The simplest version takes into account, in the process, only two different traffic streams, namely, on the one hand, telephone traffic and, on the other hand, Internet dial-up traffic. However, the process can analogously be expanded so that additional or different traffic streams are taken into account separately, for example, international telephone calls.

In the following, a sample embodiment will be explained in greater detail, using the drawing.

The following are shown:
- Fig. 1: a simplified block diagram of a communication network;
- Fig. 2: an example of a connection matrix that represents the spatial traffic statistics of telephone traffic;
- Figs. 3a and 3b: examples for the temporal traffic statistics of the telephone and Internet dial-up traffic;
- Fig. 4: a flow chart to explain the process in accordance with the invention.

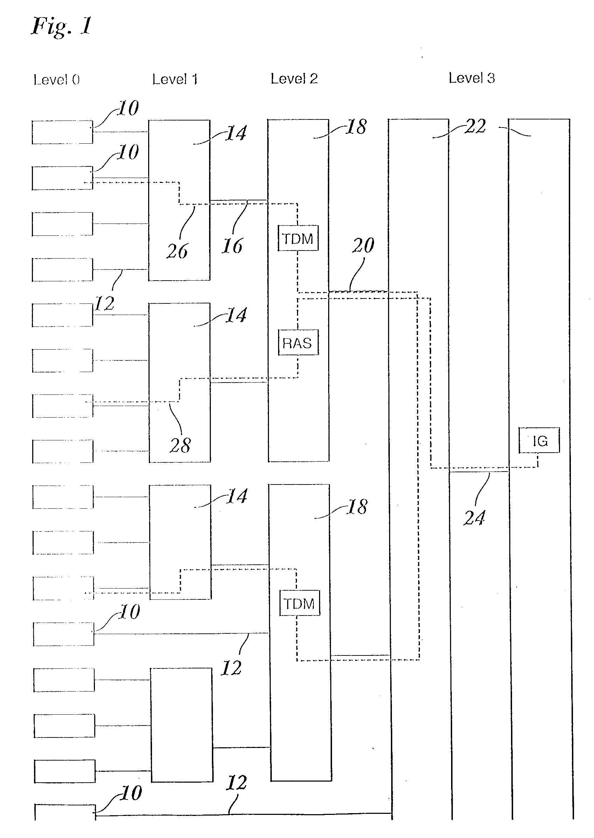

In Fig. 1, a hierarchically structured communication network is represented that has four hierarchical levels, which are designated as level 0, level 1, level 2 and level 3. The lowest level 0 consists of nodes 10, which represent participant connections that are connected by lines 12 of a Primary Network Operator to nodes 14 of level 1. Nodes 14 of level 1 are so-called PoI's, that is, interfaces between the network of the Primary Network Operator and the network of a Secondary Network Operator consisting of the network of levels 1, 2 and 3, which is to be optimized with the aid of the procedure described here. Each node 14 is connected by lines 12 of the Primary Network to a multiplicity of participants (nodes 10). In a practical example, a node 14 serves the participants of multiple local networks of the public telephone network.

Nodes 14 are not directly connected to each other, but are each connected through a line 10 with a node 18 of level 2.

Each node 18 serves multiple nodes 14 and is connected to a node 22 of level 3 of the so-called backbone. The nodes 22 of the backbone, of which only two are represented in Fig. 1, are fully networked with each other by very powerful lines 24.

Nodes 18 and 22 of levels 2 and 3 can also be directly connected to nodes 10 of level 0 and therefore carry out the function of PoI's just as the nodes 14 do. In places in which the nodes 14 and possibly the nodes 18 and 22 are housed, these will often be rented rooms or arrangements in dispatching offices of the Primary Network Operator. Lines 16, 20 and 24 between the nodes of level 1 through 3, by contrast, belong to the network of the Secondary Network Operator and can differ with respect to their transmission capacity and with respect to the transmission media used. Even the capacity and the technical equipment of nodes 14, 18 and 22 can be different, as needed. For example, these nodes may be equipped with multiplexers or TDM dispatching systems for the transmission of language information according to the TDM process (Time Division Multiplexing). Furthermore, these nodes can be equipped with so-called remote access servers (RAS), which function as Internet interfaces and provide adaptation of the Internet dial-up data to the IP protocol that is usual on the Internet. Finally, individual nodes, especially nodes 22 of the backbone, can contain an Internet Gateway (IG), which represents the actual connection between the networks of the Secondary Network Operator and the Internet.

If a participant wishes to use the Secondary Network for a long-distance telephone call, then he is connected through line 12 of the Primary Network to the nearest PoI (for example, one of the nodes 14), and from there the conversation is forwarded over the Secondary Network that is closest to the participant being called (node 10). The forwarding of the conversation from this PoI to the participant then goes back to the Primary Network. An example of such a transmission path 26 for telephone traffic is shown as a dotted line in Fig. 1. In this case, the transmission takes place through two nodes 18 of level 2, which are connected to the same node 22 of level 3. In general, the conversation will be transmitted through line 24 to another node 22 of the backbone and then to a PoI that is directly or indirectly assigned to this node.

An example of a transmission path 28 for the Internet dial-up traffic is represented in Fig. 1 as a dotted line. In the lower level, data transmission takes place on the same channels as in telephone traffic, that is first over the Primary Network and then over the PoI's of the Secondary Network Operator. However, as soon as the data arrive at either of the levels 1, 2 or 3 at a node that is equipped with an Internet interface (RAS), the data are forwarded through the backbone to the nearest Internet Gateway (IG).

Nodes 14, 18, 22 and lines 16, 20, 24 of the Secondary Network Operator must be dimensioned in such a manner that at any time and on any part of the network sufficient transmission capacity is available. On the other hand, however, over-dimensioning is to be avoided, so that no unnecessary costs are incurred.

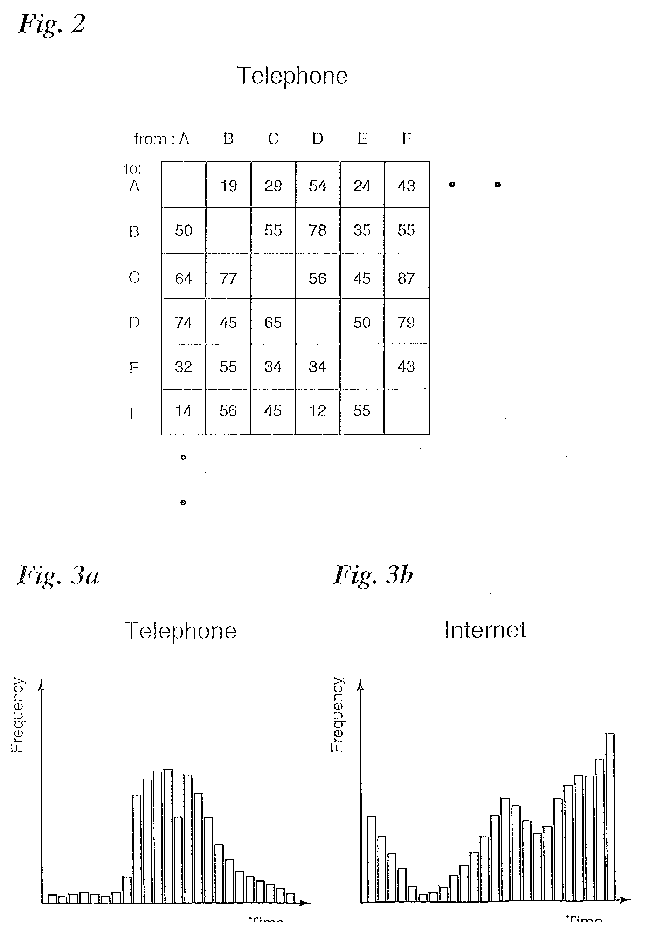

To determine the need, a traffic matrix will be generated for telephone traffic and Internet dial-up traffic that indicates the spatial distribution of the traffic density. Fig. 2 shows, as an example, a traffic matrix for telephone traffic. The spatial extent of the network is divided into regions A, B, C, etc. The matrix then provides for each pair of regions, for example, A and B, the frequency of telephone calls from A to B or from B to A. In the example shown, a distinction is made between the two directions of telephone connection (from A to B or B to A). If this differentiation is dropped, the amount of data of the traffic matrix is halved.

A corresponding traffic matrix is also generated for the Internet dial-up traffic.

In order to obtain both traffic matrices, for example, a software tool may be used that is offered by the Nortel Data Network Systems GmbH & Co. KG, Friedrichshafen, under the title "TraffMate."

In addition to the spatial distribution of the traffic density, the temporal density distribution of the traffic streams is determined, indeed again separately for telephone traffic and Internet dial-up traffic. Figs. 3a and 3b show daily profiles for the temporal distribution of the traffic density in the form of bar graphs, where each bar corresponds to a time interval of one hour. It can be seen that the daily profiles of the traffic streams clearly differ from each other. While in the telephone traffic, the traffic density at night is extremely low and only at the beginning of the working day, around 8 a.m., abruptly rises and then falls over the course of the afternoon. The Internet traffic is marked by a high-traffic density in the evening and night hours, while a minimum is reached in the early morning hours.

The daily profiles according to Figs. 3a and 3b can be determined for the network as a whole, by making the realistic assumption that the habits of the network users do not show very large spatial differences. Optionally, it is however possible to break down the daily profiles spatially by, for example, generating a separate daily profile for each matrix element of the traffic matrix according to Fig. 2.

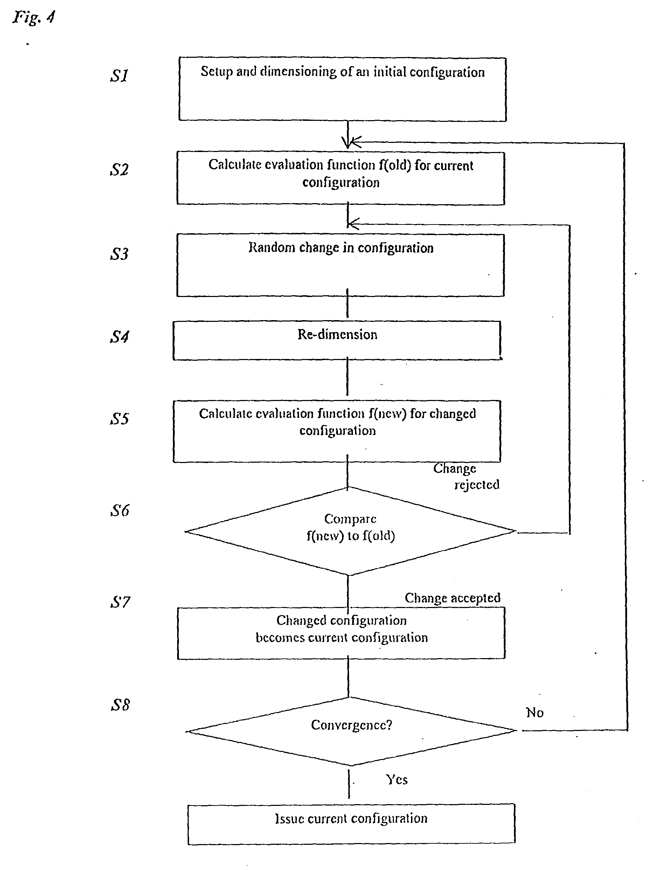

The traffic statistics shown in Figs. 2 and 3 are prepared and stored electronically and form the basis for the construction of the communication network, according to a process that will be described in greater detail referring to Fig. 4.

The process begins with the fact that in Step S1 a certain beginning configuration and dimensioning of the network is prescribed. In this connection, the places and hierarchical structure of all nodes 14, 18 and 22 of the Secondary Network are specified and input into a data processing system in which the process described is implemented. To the extent that some possible PoI's are not used in the beginning configuration, the location of these PoI's are also input. Furthermore, it can be specified for every PoI which technical equipment can be installed there. The dimensioning of the individual network elements (nodes and lines) is done with the aid of a software module that refers back to the statistical data shown in Figs. 2 and 3 and assures that sufficient capacity is available for all connection frequencies to be expected. In practice, for a given line, that is for a node-to-node connection, different transmission channels are available. The software module then calculates the least expensive combination of transmission channels with which the transmission capacity is reached.

In Step S2, an evaluation function f(old) is calculated for the configuration and dimensioning thus obtained. This evaluation function serves to estimate all installation and operating costs for the network, according to a suitable cost model. These costs especially include the fees for the use of lines 12 of the Primary Network that are dependent upon the traffic density at the PoI involved and - if the area assigned to the PoI's is very large - on the average distance between participant and PoI. Also included in the evaluation function are the operating and capital costs for the technical equipment of each node, as well as the operating and capital costs for the network lines 16, 20 and 24. Depending on the type of transmission medium used, these costs may also be dependent upon distance for individual lines.

In Step S3, one or more changes are made randomly. The changes can, for example, consist of increasing or decreasing the size of the area covered by a PoI, removing a PoI or adding a new PoI, assigning a node 14 of level 1 to another node 18 of level 2, changing a node of level 1 into a node of a higher level or vice versa, and correspondingly adapting the assignments between the nodes of the different levels.

In Step S4, a new dimensioning is undertaken for the changed configuration. For this purpose, the same software module can be used as in Step 1.

In Step S5, the evaluation function f(new) for the reconfigured and re-dimensioned network is calculated on the basis of the same cost model as used in Step S2. In Step S6, the cost functions for the new and old configurations are compared, and a decision is made as to which of the two configurations should form the basis for the further process. The higher the assumed "temperature," the sooner an acceptance of the evaluation function is tolerated. If the new configuration is rejected, then we return to Step S3. Otherwise, in Step S7, the changed configuration is declared to be the current configuration. In Step S8, it is then checked whether the configuration has stabilized near a minimum for the evaluation function. If this is not the case, we go back to Step S2. The calculation of the evaluation function in Step S2 is then trivial, since this evaluation function is equal to the evaluation function f (new) calculated previously in Step S5.

The loop consisting of Steps S2 through S8 is repeated until it is shown in Step S8 that the evaluation function has not significantly decreased, even after multiple changes are tried. This means that the configuration has approached the optimum. In this case, the current configuration is issued as the result of the optimization process and the network is established in this configuration and dimensioning.

Of course, the above-described procedure is equally suitable for optimizing an already existing network if the conditions, for example, the cost structure and/or the traffic statistics, have changes.

In experiments, network configurations were calculated according to the above-described process, taking into account the traffic statistics for both telephone traffic and Internet traffic, and the results were compared to network configurations which had optimized, taking into account traffic statistics for only telephone traffic or for only Internet dial-up traffic.

The process according to the invention provided an average of approximately 20% lower evaluation function. This proves that with the process in accordance with the invention, considerable synergy effects can be achieved and corresponding cost savings can be obtained.

## Claims

1. Process for the construction of a hierarchically structured communication network for telephone traffic and Internet dial-up traffic, with nodes (14, 18, 22) that differ in their hierarchical level and their technical equipment and of which at least one is designed as an Internet interface (RAS) and which are connected to each other by lines (16, 20, 24) that have different band widths and/or are based on different transmission media, characterized by the following steps:
(a) Assigning possible locations for the nodes (14, 18, 22);
(b) Determining separate traffic statistics for telephone traffic and Internet dial-up traffic;
(c) Determining a beginning configuration for the network;
(d) Dimensioning the network elements, that is, the nodes and lines, on the basis of peak load, which results for each network element from the two traffic statistics referred to in Step (b);
(e) Calculating an evaluation function that represents the installation and operating expense for the current configuration;
(f) Changing the configuration randomly and repeating the Steps (d) and (e) for the new configuration;
(g) Comparing the evaluation functions for the new and the old configuration and deciding which configuration is adopted as the current configuration, according to a Simulated Annealing Algorithm;
(h) Repeating Steps (f) and (g) until the evaluation function converges;
(i) Arranging the nodes and leads in accordance with the configuration obtained in Step (h).

2. Process in accordance with Claim 1, characterized in that the traffic statistics include both the spatial distribution and the temporal distribution for telephone traffic on the one hand and Internet dial-up traffic on the other hand.

3. Process in accordance with Claim 1 or 2, characterized in that possible configurations include even such configurations in which a part of telephone traffic takes place over the Internet.
